# FASCICULE DE BREVET EUROPEEN

(11) **EP 1 343 577 B1**
(45) Date de publication et mention de la délivrance du brevet: **19.07.2006**
(21) Numéro de dépôt: 01998394.9
(22) Date de dépôt: 28.11.2001
(51) Int. Cl.: B01F 5/02, B01F 3/04, B01F 5/04

(54) **PROCEDE, MODULE ET DISPOSITIF DE MISE EN CONTACT D'UN GAZ ET D'UN LIQUIDE**
VERFAHREN, MODUL UND VORRICHTUNG ZUM KONTAKTIEREN EINES GASES UND EINER FLÜSSIGKEIT
METHOD, MODULE AND DEVICE FOR CONTACTING A GAS AND A LIQUID

(30) Priorité: 30.11.2000 FR 0015492
(43) Date de publication de la demande: 17.09.2003
(73) Titulaire: COMMISSARIAT A L'ENERGIE ATOMIQUE, 75752 Paris Cédex 15 (FR)
(72) Inventeur: TURCHET, Jean-Pierre, Résid.les bois de Costebelle, F-83400 HYERES (FR); FOURNEL, Bruno, F-83560 VINON S/VERDON (FR); FRECHOU, Xavier, F-84120 PERTUIS (FR)
(74) Mandataire: Poulin, Gérard
(86) Numéro de dépôt international: PCT/FR2001/003762
(87) Numéro de publication internationale: WO 2002/043847

(56) Documents cités:
- FR-A- 2 773 725
- GB-A- 458 583
- US-A- 4 157 304
- US-A- 4 162 971
- US-A- 5 556 033

## Description

### Domaine technique de l'invention

La présente invention se rapporte à un procédé, à un module et à un dispositif de mise en contact d'un gaz et d'un liquide.

Des systèmes de mise en contact d'un gaz et d'un liquide sont décrits dans les brevets US-A-4 162 971 et US-A-4 157 304.

Elle s'applique à tout procédé physique et/ou chimique basé sur une mise en contact d'un gaz et d'un liquide en vue d'effectuer par exemple des réactions chimiques, biochimiques ou des échanges physiques avec ou sans particules en suspension dans le gaz et/ou dans le liquide.

### Etat de la technique antérieur

Par exemple les procédés de dépoussiérage des effluents gazeux par voie humide utilisés actuellement dans l'industrie mettent en oeuvre des techniques dont le but essentiel est d'offrir une grande surface de contact entre un gaz et un liquide de lavage. Parmi les procédés les plus utilisés on trouve les tours de lavages telles que celles à garnissage, chicanes, gouttes etc., les laveurs venturis, les laveurs à vortex, et les laveurs rotatifs.

Il existe également des systèmes de mise en contact d'un gaz et d'un liquide par barbotage dont l'oxygénation ou l'ozonation sont un exemple, et des systèmes de génération de mousse au moyen d'un gaz pollué à des fins de dépollution, ou d'un gaz propre pour générer des mousses de nettoyage ou de décontamination.

Malheureusement ces systèmes présentent notamment les inconvénients suivants : ils sont sensibles au colmatage dans le cas de gaz ou de liquide pollués, ils entraînent une forte perte de charge, et/ou ils ne présentent pas une excellente dispersion du gaz dans le liquide.

### Exposé de l'invention

La présente invention a précisément pour but de fournir un procédé, un module et un dispositif de mise en contact d'un gaz et d'un liquide qui pallient notamment les inconvénients précités.

Dans le procédé de la présente invention :
- on fait circuler dans un tube sensiblement horizontal et immergé dans le liquide, à partir d'un moyen pour introduire le gaz dans le tube disposé entre la première et la deuxième extrémités du tube, un flux de gaz remplissant le tube et se déplaçant vers la deuxième extrémité du tube, et
- on envoie dans le flux de gaz, à partir de la première extrémité du tube, le liquide sous forme d'un jet suivant une première direction sensiblement parallèle à l'axe du tube et n'entrant pas en contact avec celui-ci, sur une paroi inclinée d'un angle de 35 à 55 degrés par rapport à la première direction, la paroi dispersant le jet de liquide dans le gaz, une ouverture étant prévue dans le tube au niveau de sa deuxième extrémité pour que le liquide sorte du tube avec le gaz dès que le jet est dispersé par la paroi.

Le terme "gaz" englobe tout ce qui n'est pas liquide ou solide, il désigne l'état gazeux. Il peut s'agir d'un gaz tel qu'un gaz chimique, de l'air, une fumée, etc...

Le jet peut être choisi par exemple parmi un jet plat, un jet rectiligne ou un jet à cône plein, de préférence un jet rectiligne. Le jet peut être par exemple sensiblement horizontal. Il est de préférence envoyé sur la paroi à une pression allant de 2x10⁵ à 5x10⁵ Pa.

La paroi utilisée peut présenter avantageusement un bord libre, et le jet peut être envoyé avantageusement sur la paroi au voisinage de ce bord libre. Les avantages liés à ce mode de réalisation sont décrits dans les exemples ci-dessous.

Des dispositifs pour la mise en oeuvre du procédé de la présente invention sont décrits ci-dessous.

Les résultats expérimentaux obtenus par les inventeurs montrent que le procédé de la présente invention permet d'obtenir une excellente interface liquide/gaz, ce qui optimise tous les procédés dans lesquels cette interface joue un rôle.

La présente invention se rapporte également à un procédé de traitement d'une eau usée par oxygénation ou ozonation de cette eau, dans lequel l'oxygénation ou l'ozonation est réalisée au moyen d'un procédé selon la présente invention, dans lequel le gaz est l'oxygène ou l'ozone et le liquide est l'eau usée à traiter.

La présente invention fournit également un procédé de traitement d'un gaz pollué au moyen d'un liquide de traitement, ledit procédé comprenant une étape de mise en contact du gaz et du liquide de traitement au moyen d'un procédé selon l'invention, dans lequel le gaz est le gaz pollué et le liquide est le liquide de traitement.du gaz.

Selon un mode de réalisation de l'invention, le liquide de traitement peut comprendre un agent moussant permettant de former de la mousse à partir du gaz à traiter et du liquide de traitement, ceci afin offrir une interface gaz/liquide beaucoup plus importante que des laveurs classiques de gaz pollués. Dans le cas d'une mousse, cette interface est par exemple liée à la taille des bulles et au volume de gaz à traiter. Dans le cas d'un laveur conventionnel par exemple, cette interface est liée soit au couple taille des gouttes/débit de liquide de lavage, soit à la surface d'échange mise en oeuvre par exemple dans des tours à plateaux ou à garnissage. Pour des tailles de gouttes et de bulles similaires, on peut estimer qu'une mousse offre de 20 à 30 fois plus de surface de contact entre le gaz et le liquide qu'un système de lavage classique.

Les inventeurs ont montré que la présente invention présente en outre les avantages suivants lorsqu'elle utilise un agent moussant :
- elle permet de générer une mousse homogène composée de bulles du gaz, par exemple d'un gaz à traiter, d'un diamètre inférieur à 2 mm pour obtenir une surface de contact gaz/liquide élevée,
- elle engendre une faible perte de charge et permet de traiter des flux de gaz à l'échelon industriel,
- elle est peu sensible au colmatage qui peut se produire dans les procédés et dispositifs de l'art antérieur, par exemple par les aérosols véhiculés par le gaz,
- elle permet de traiter des débits supérieurs à 500 m³.h⁻¹ (voir dispositif ci-dessous). Les débits de gaz indiqués dans la présente description sont tous donnés dans les conditions normales de température et de pression.

Les techniques de génération de mousse de cette qualité de l'art antérieur ne permettent de répondre qu'au premier critère.

Hormis les batteurs mécaniques pour lesquels les pièces tournantes peuvent poser des problèmes, les autres techniques utilisent pour la plupart des garnissages poreux à faibles espaces interstitiels très sensibles au colmatage qui occasionnent en outre des pertes de charge importantes. D'autre part, ces techniques de l'art antérieur sont généralement réservées à la génération de faibles quantités de mousses mettant en oeuvre des débits gazeux inférieurs à 50 m³.h⁻¹.

Le procédé de la présente invention, lorsqu'il utilise une mousse, peut en outre comprendre une étape de séparation du gaz traité de la mousse formée. Cette étape de séparation peut être réalisée par exemple au moyen d'ultrasons, au moyens d'agents chimiques ou par des moyens mécaniques.

La présente invention se rapporte également à l'utilisation du procédé de mise en contact d'un gaz et d'un liquide selon la présente invention pour effectuer une réaction chimique, biochimique ou un échange physique avec ou sans particules en suspension dans le gaz ou dans le liquide.

Le procédé de la présente invention, notamment lorsqu'il utilise une mousse, est utile par exemple dans les procédés de dépollution ou de décontamination de gaz dans lesquels le gaz et le liquide doivent être mis en contact. Il peut aussi être utilisé par exemple pour dépoussiérer un gaz ou une fumée issue par exemple de l'incinération de déchets ou d'une industrie quelconque dans lequel (laquelle) un tel dépoussiérage est requis.

Par exemple, comme exposé ci-dessus, en associant le procédé de la présente invention à l'utilisation d'un agent moussant dans le liquide de traitement, il permet de traiter des aérosols et des composés gazeux tels que par exemple HCl, SO₂, H₂S etc. L'aérosol est défini ici comme un système colloïdal dont le milieu de dispersion est un gaz, la phase dispersée pouvant être soit un solide, cas d'une fumée, soit un liquide, cas d'un brouillard.

La présente invention fournit également un module et un dispositif utilisables pour la mise en oeuvre du procédé de la présente invention.

Selon la présente invention, le module de mise en contact d'un gaz et d'un liquide comprend :
- un tube, sensiblement horizontal, comportant une première et une deuxième extrémités,
- un moyen pour introduire le gaz dans le tube disposé entre la première et la deuxième extrémités de celui-ci,
- un moyen pour envoyer le liquide sous forme d'un jet parallèle à l'axe du tube dans la direction de la deuxième extrémité du tube, le jet n'entrant pas en contact avec le tube, ce moyen étant disposé au niveau de la première extrémité du tube,
- une paroi d'impact du jet faisant saillie dans le tube au niveau de sa deuxième extrémité, la paroi étant inclinée d'un angle de 35 à 55 degrés par rapport à l'axe du tube, de préférence d'un angle de 40 à 50 degrés, de toute préférence d'un angle de 42 à 47 degrés, la paroi présentant un bord libre dans le tube et ayant une position telle que le jet vient en totalité en impact contre celle-ci au voisinage dudit bord libre, et
- une ouverture prévue dans le tube, au niveau de la deuxième extrémité du tube, de manière à ce que le jet dispersé par son impact sur la paroi sorte directement du tube.

Le moyen pour envoyer le liquide sous forme d'un jet peut être par exemple une buse à jet plat, une buse à jet rectiligne, une buse à jet à cône plein, de préférence une buse à jet rectiligne.

Il peut être en un matériau quelconque pourvu qu'il résiste chimiquement au liquide et au gaz avec lesquels il est en contact, et physiquement aux pressions de liquide et de gaz avec lesquels il est en contact. Il peut être par exemple en chlorure de polyvinyle (PVC) ou en inox.

Selon l'invention, le tube a de préférence un diamètre adapté à la quantité de gaz et de liquide à mettre en contact. Le diamètre du tube du module peut être choisi par exemple de manière à ce que tout dispositif fabriqué à partir d'un module selon la présente invention soit peu sensible au colmatage pour une perte de charge inférieure à 23x10²Pa.

Le flux de gaz peut être créé soit par la pression du gaz, par exemple lorsqu'il est envoyé dans le tube, soit en aspirant le gaz en aval, par exemple en créant une dépression en aval du module. Un système fonctionnant en dépression est décrit dans la demande de brevet français FR-A-2 773 725.

L'introduction du gaz est de préférence réalisée entre la buse pour envoyer le liquide sous forme d'un jet et la paroi, afin d'éviter l'encrassement de la buse.

La paroi d'impact peut par exemple être disposée de telle manière qu'elle disperse le jet de liquide vers le bas. Le matériau qui la constitue peut être identique ou différent de celui qui constitue le tube. Ce matériau présente de préférence les caractéristiques chimiques et physiques précitées.

De manière avantageuse la paroi d'impact fait barrage au gaz introduit dans le tube, pour forcer l'entraînement du gaz par le jet dispersé par la paroi. Les exemples ci-dessous montrent en effet que ce mode de mise en oeuvre de la présente invention permet d'obtenir une meilleure mise en contact du gaz et du liquide.

De manière avantageuse, dans le mode particulier de réalisation de la présente invention, la paroi d'impact peut être fixée au tube. En effet ceci permet de simplifier la structure du module.

Selon l'invention, la paroi peut être par exemple sous la forme d'une lame.

La paroi peut faire saillie dans le tube d'environ 1/3 du diamètre du tube dans le mode particulier de la présente invention.

Le module de la présente invention présente les avantages d'être peu sensible au colmatage, tout en assurant, avec une faible perte de charge, une excellente dispersion du gaz dans le liquide. En outre, le moyen, par exemple une buse, pour envoyer le liquide en impact sur la paroi ne peut pas être encombré par des particules présentes dans un gaz ou une fumée.

Le module de la présente invention permet par exemple de disperser 30 m³.h⁻¹ de gaz avec 1 m³.h⁻¹ de liquide sous 2x10⁵ Pa à partir d'un tube ayant un diamètre de 28 à 32 mm.

La présente invention se rapporte également à un dispositif de mise en contact d'un gaz et d'un liquide comprenant une pluralité de modules de mise en contact d'un gaz et d'un liquide selon l'invention.

Le nombre et la dimension des modules sont choisis en fonction des débits de gaz et de liquide à traiter.

Selon un mode de mise en oeuvre de la présente invention, les modules de mise en contact peuvent par exemple être fixés en étoile sur un support. Le dispositif peut comprendre par exemple 16 modules.

Le dispositif de la présente invention présente notamment l'intérêt de permettre une mise en contact simultanée d'une grande quantité de gaz et de liquide. Une conception modulaire selon la présente invention permet de disperser par exemple aisément 500.m³.h⁻¹ de gaz devant être traité dans un liquide.

Le dispositif de la présente invention peut en outre être couplé, dans le cas d'une utilisation du dispositif avec un agent moussant, à un moyen pour séparer le gaz de la mousse formée. Ce moyen peut être par exemple un générateur d'ultrasons ou un séparateur turbocentrifuge de gaz.

La qualité de la dispersion et l'absence d'éléments mobiles grâce à la présente invention rendent cette dernière très utile pour toutes les applications dans lesquelles une mise en contact d'un gaz et d'un liquide est nécessaire.

La présente invention est très performante par exemple pour un traitement d'un gaz pollué basé sur la génération d'une mousse et permet d'obtenir une mousse fine et homogène formée avec le gaz à traiter . La destruction de la mousse et la séparation des polluants peut ensuite être réalisée par exemple par un turbo centrifugeur de gaz.

Elle est très performante par exemple aussi, avec ou sans mousse, dans les procédés de dépoussiérage des effluents gazeux par voie humide utilisés actuellement dans l'industrie mettant en oeuvre des techniques dont le but essentiel est d'offrir une grande surface de contact entre un gaz et un liquide de lavage.

D'autres caractéristiques et avantages dé la présente invention apparaîtront encore à la lecture des exemples suivants donnés à titre illustratif et non limitatif en référence aux figures annexées.

### Brève description des figures

- La figure 1 est un schéma d'une vue en coupe d'un module de la présente invention,
- la figure 2 est un schéma d'une vue en coupe d'un module de la présente invention sur lequel est représenté un conduit d'entré d'un flux de gaz,
- la figure 3 est un graphique représentant les pertes de charge pour chaque type de buse, en fonction de leur position,
- la figure 4 est un schéma d'un mode de réalisation du dispositif selon l'invention comprenant 16 modules,
- la figure 5 est un schéma du dispositif de la présente invention représenté sur la figure 4, partie supérieure enlevée, sur lequel les buses sont visibles,
- la figure 6 est un schéma du dispositif de la figure 4 vue du dessous,

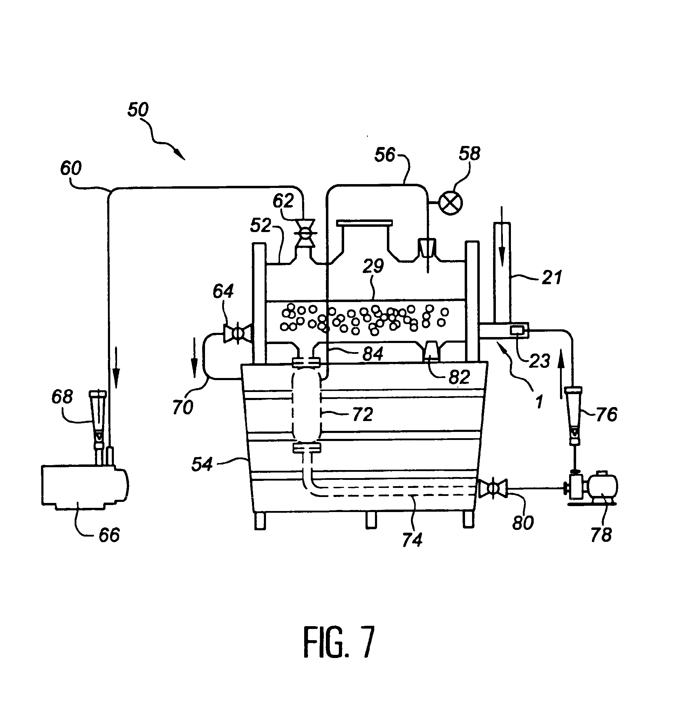

- la figure 7 est un schéma d'un dispositif expérimental comprenant un module selon la présente invention pour la mise en contact d'un gaz et d'un liquide dans lequel le tube est immergé dans le liquide.

### Exemples

### Exemple 1 : Un mode de réalisation d'un module selon l'invention

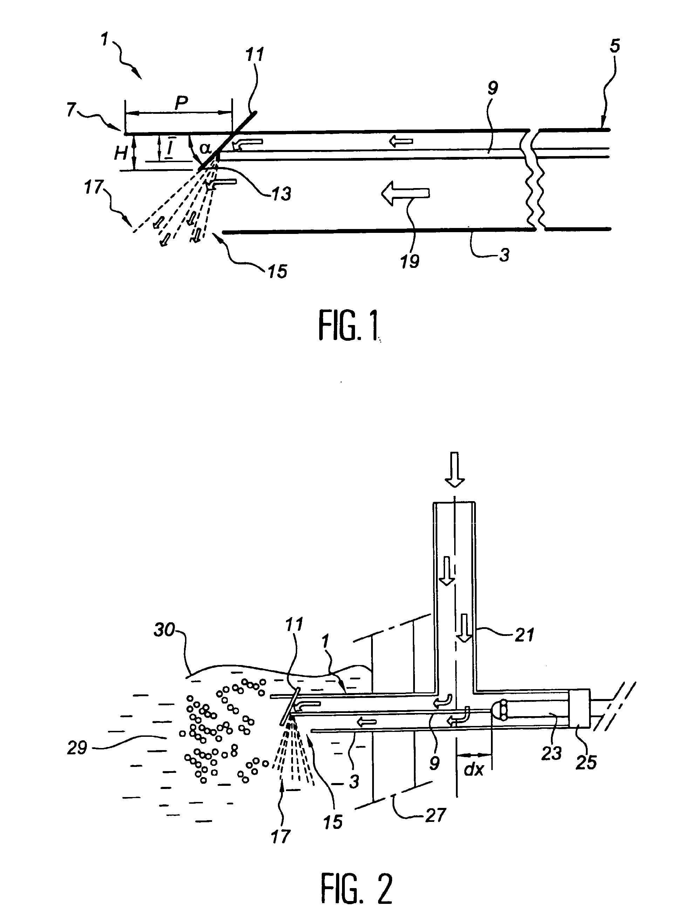

La figure 1 est un schéma d'une vue en coupe du mode de réalisation d'un module de mise en contact d'un gaz et d'un liquide selon la présente invention.

Ce module comprend un tube 3 comportant une première et une deuxième extrémités 5 et 7 respectivement, un moyen (non représenté) pour envoyer le liquide sous forme d'un jet 9 dans le tube 3 dans la direction de la deuxième extrémité 7 du tube, le jet 9 n'entrant pas en contact avec le tube 3, ce moyen étant disposé au niveau de la première extrémité du tube, et un moyen (non représenté) pour introduire le gaz dans le tube entre la première 5 et la deuxième 7 extrémités de celui-ci.

Ce dispositif comprend une paroi d'impact 11 du jet faisant saillie dans le tube 3 au niveau de sa deuxième extrémité sous la forme d'une lame. Cette lame 11 est inclinée d'un angle α par rapport à l'axe du tube 3. Cette lame 11 présente un bord libre 13 dans le tube. Elle a une position telle que le jet vient en totalité en impact contre celle-ci au voisinage dudit bord libre 13. La lame 11 d'impact du jet 9 fait barrage au gaz introduit dans le tube, pour forcer l'entraînement du gaz par le jet dispersé par la paroi. Les flèches 19 indiquent le flux de gaz dans le tube, puis au sein du jet dispersé. La lame 11 est fixée au tube 3.

Une ouverture 15 est prévue dans le tube, au niveau de la deuxième extrémité 7 du tube, de manière à ce que le jet dispersé 17 par son impact sur la lame 11 sorte directement du tube 3 vers le bas.

Sur cette figure, P indique la position de la lame 11 par rapport à l'extrémité 7 du tube 3, H indique la distance de l'extrémité libre de la lame 11 vis à vis du sommet du tube 3, et I indique le niveau du point d'impact du jet 9 de liquide sur la lame par rapport au sommet du tube 3.

L'exemple 4 ci-dessous montre l'effet du type de jet utilisé et des valeurs de α, P, H, et I sur la mise en contact du liquide et du gaz selon le procédé de la présente invention.

### Exemple 2 : Un mode de réalisation du moyen pour introduire le gaz dans le tube du module de l'exemple 1

La figure 2 est un schéma d'une vue en coupe du module de la présente invention présenté sur la figure 1 muni d'un conduit d'entré 21 d'un flux de gaz indiqué par les flèches 19. Les références utilisées sur cette figure sont identiques à celles de la figure 1 pour les mêmes éléments.

Le conduit d'entrée 21 constitue le moyen pour introduire le gaz dans le tube 3.

Sur cette figure le module 1 est représenté plongé dans un liquide 29 ayant un niveau 30. Un moyen 23, 25 pour envoyer le liquide sous forme d'un jet 9 coaxial dans le tube dans la direction de la deuxième extrémité 7 du tube est disposé au niveau de la première extrémité 5 du tube. Ce moyen comprend une buse à jet rectiligne 23 et un moyen de fixation 25 de la buse. Le jet 9 n'entre pas en contact avec le tube 3.

Le module 1 est fixé sur un support fixe 27.

### Exemple 3 : Utilisation d'un module de la présente invention

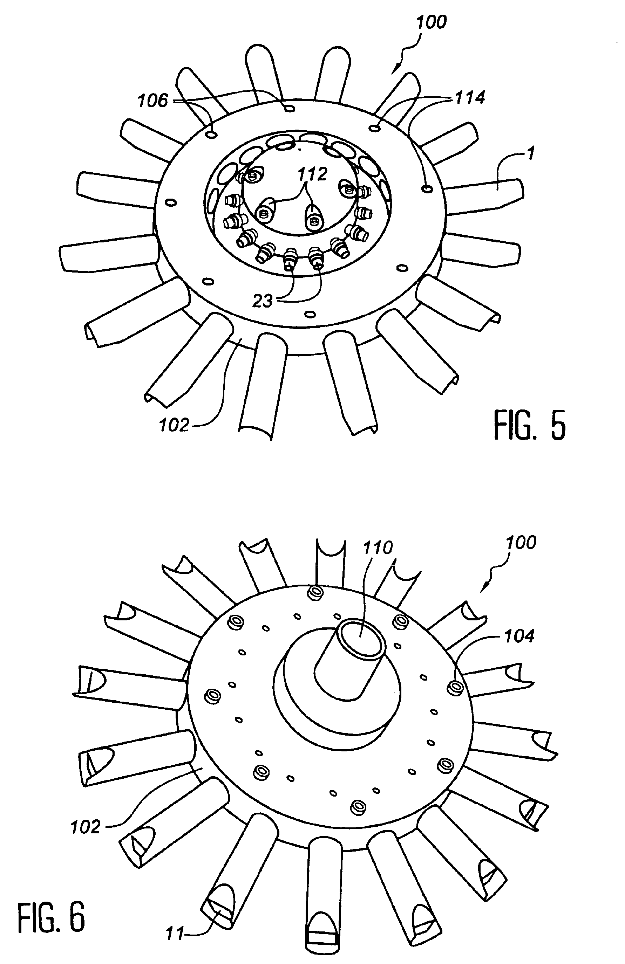

Un dispositif expérimental équipé du module décrit dans les exemples 1 et 2 selon la présente invention a été réalisé. Ce dispositif est représenté sur la figure 6. Les références identiques aux figures 1 et 2 indiquent les mêmes éléments.

| | |
|---|---|
| Référence | Elément du dispositif |
| 1 | : module de la présente invention |
| 21 | : conduit d'entrée de gaz |
| 23 | : buse |
| 29 | : niveau de liquide |
| 50 | : pilote |
| 52 | : enceinte de verre |
| 54 | : bac de rétention |
| 56 | : purge d'air |
| 58 | : manomètre |
| 60 | : aube d'aspiration du gaz à traiter |
| 62 | : vanne de réglage de débit du gaz à traiter |
| 64 | : vanne de vidange |
| 66 | : pompe à palette d'aspiration de gaz |
| 68 | : débitmètre sortie de gaz |
| 70 | : tube de vidange |
| 72 | : piège à air |
| 74 | : tuyau d'aspiration de la pompe de recirculation du liquide |
| 76 | : débitmètre |
| 78 | : pompe de recirculation du liquide |
| 80 | : vanne d'isolement |
| 82 | : bouchon de vidange |
| 84 | : purge d'air |

### Exemple 4 : Utilisation du dispositif de l'exemple 3

Cet exemple présente les différentes expérimentations réalisées par les inventeurs pour montrer les performances du procédé et du module de mise en contact d'un gaz et d'un liquide selon l'invention.

Dans un premier temps un tube sans lame d'impact est expérimenté, puis un tube avec lame d'impact.

### Tube sans lame

### Le moyen d'injection

Quatre types de buses ont été testées. Elles ont été choisies principalement pour leur capacité à produire une force d'impact importante et des formes de diffusion différentes.

Les caractéristiques de ces buses pour une pression d'alimentation de 2x10⁵Pa (2 bars) sont les suivantes : buse à jet plat : diamètre de l'orifice (d.o.) de 4,8 mm, débit (d) 19,3 ℓ.mn⁻¹, angle de dispersion (a.d.) de 22 degrés ; buse à jet rectiligne : d.o. = 4,4 mm, d = 16,1 ℓ.mn⁻¹ ; buse à jet cuillère : d.o. = 4,8 mm, d = 19,3 ℓ.mn⁻¹, a.d. = 45 degrés, et angle de déflexion de 37 degrés ; et buse à cône plein : d.o. = 4,4 mm, d = 16,1 ℓ.mn⁻¹, a.d. = 15 degrés.

Les essais ont été réalisés avec les configurations suivantes : hauteur du fond de l'enceinte à l'axe du tuyau d'arrivée de gaz : 5,1 cm puis 9,6 cm ; diamètre du tube PVC d'arrivée de gaz dans l'enceinte : 28 à 32 mm ; distance dX : 12,5 cm (voir figure 2) ; volume de liquide dans le dispositif : entre 30 et 35 litres ; hauteur de liquide dans la cuve 52 : entre 10 et 20 cm, cette valeur a été prise au niveau de la bride d'enceinte, soit une hauteur de liquide de 5 à 10 cm au-dessus du module de la présente invention ; et débit de gaz : 30 m³.h⁻¹.

Au cours de ces essais l'influence de la position dX de la buse vis-à-vis de l'arrivée de gaz et du débit de liquide dans la buse est mesurée ou observée.

La valeur de la position dX de la buse correspond à la distance de l'extrémité de la buse vis-à-vis de l'axe d'arrivée du tube de gaz.

L'appréciation de l'efficacité du système a été réalisée en fonction de la perte de charge côté gaz, équivalente à la différence entre la pression de l'enceinte et la pression atmosphérique, et de la qualité de la dispersion du gaz dans la phase liquide. Cette dernière appréciation a été essentiellement visuelle.

Chaque type de buse a été testée à 10 positions différentes vis-à-vis de l'axe du tube d'arrivée de gaz. Ces positions correspondent à une avancée de la buse par incrément de 2 cm à partir de la position de recul maximale. La qualité et la quantité de bulles générées à chaque position ont été appréciées visuellement.

Parallèlement la perte de charge engendrée par le système a été mesurée.

### Variation de la position de la buse

### Efficacité sur la génération de bulles

L'objectif étant d'apprécier la qualité de la dispersion des bulles créées par le module de la présente invention sans la paroi, les essais ont été réalisés dans un premier temps, sans tensioactifs avec les quatre buses précitées dans des conditions similaires. Les observations ont été effectuées une minute environ après le démarrage des deux pompes air et liquide. Le temps d'attente entre chaque mesure était de 5 minutes environ. Le débit de liquide était maximal soit 1100 ℓ.h⁻¹. La pression à l'entrée de la buse était de 2x10⁵ Pa (2 bars).

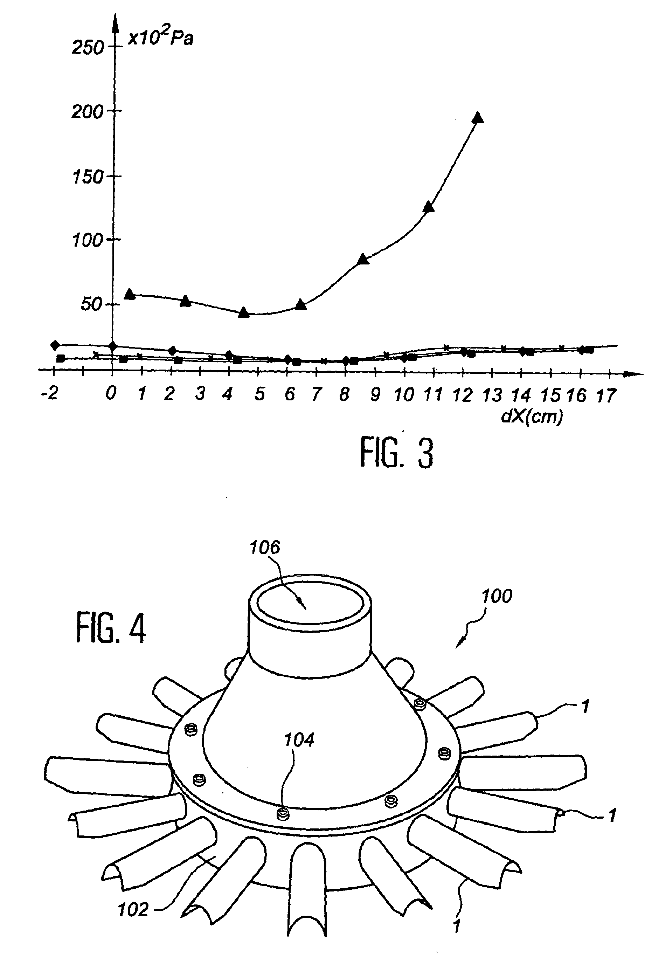

Les résultats obtenus sont regroupés dans le tableau I suivant et présentés sur la figure 3 annexée.

La figure 3 est un graphique représentant les pertes de charge en Pa pour chaque type de buse, en fonction de leur position dX en cm. Sur cette figure, la courbe ■ représente les résultats obtenus pour la buse à jet rectiligne, la courbe ▲ représente les résultats obtenus pour la buse à jet cuillère, la courbe x représente les résultats obtenus pour la buse à jet à cône plein, et la courbe ◆ représente les résultats obtenus pour la buse à jet plat.

La comparaison des résultats pour les quatre buses suivant la position dX de la buse vis à vis de l'axe du tube d'arrivée de gaz s'effectue selon un critère d'efficacité de génération apprécié visuellement et fonction de la taille des bulles, de leur homogénéité et de leur quantité.

La valeur de ce critère selon une échelle de 0 à 10 est d'autant plus élevé que les bulles sont de petite taille, c'est à dire <2 mm, en grand nombre et que le nombre de grosses bulles, c'est à dire de taille >10 mm, est faible.

L'efficacité de 10 a pour référence le meilleur résultat obtenu lors de ces essais. Il ne correspond pas à une dispersion totale du gaz dans le milieu liquide.

**Tableau I : Efficacité des différents types de buses sans paroi dans le module de la présente invention**

| Buse à jet plat | | Buse à jet rectiligne | | Buse à jet cuillère | | Buse à jet cône plein | |
|---|---|---|---|---|---|---|---|
| dX cm | Efficacité | dX cm | Efficacité | dX cm | Efficacité | dX cm | Efficacité |
| - 2 | 2 | - 1,7 | 3 | 0,5 | 0 | - 0,6 | 1 |
| 0 | 3 | 0,3 | 4 | 2,5 | 1 | 1,4 | 1 |
| 2 | 4 | 2,3 | 5 | 4,5 | 2 | 3,4 | 2 |
| 4 | 4 | 4,3 | 6 | 6,5 | 2 | 5,4 | 3 |
| 6 | 5 | 6,3 | 7 | 8,5 | 3 | 7,4 | 4 |
| 8 | 5 | 8,3 | 8 | 10,5 | 4 | 9,4 | 5 |
| 10 | 5 | 10,3 | 8 | 12,5 | 4 | 11,4 | 5 |
| 12 | 5 | 12,3 | 9 | 14,5 | - | 13,4 | 6 |
| 14 | 7 | 14,3 | 10 | 16,5 | - | 15,4 | 6 |
| 16 | 8 | 16,3 | 10 | 18,5 | - | 17,4 | 7 |

### Analyse des résultats

Les meilleures efficacités sont obtenues avec la buse à jet rectiligne et lorsque les buses sont proches de l'enceinte.

Cependant, l'efficacité, même avec la buse à jet rectiligne, n'est pas très satisfaisante car une quantité importante de gaz n'est pas dispersée dans le liquide et s'échappe en bulles de taille >20 mm à la partie supérieure du tube d'injection.

### Pertes de charge

Le tableau II ci dessous présente les pertes de charge mesurées pour chaque type de buse en fonction de leur position.

**Tableau II : Perte de charge sur le flux gazeux engendrée par les buses**

| Buse à jet plat | | Buse à jet rectiligne | | Buse à jet cuillère | | Buse à jet à cône plein | |
|---|---|---|---|---|---|---|---|
| dX cm | x10² Pa | dX cm | x10² Pa | dX cm | x 10² Pa | dX cm | x10² Pa |
| - 2 | 18,4 | - 1,7 | 8,2 | 0,5 | 58,3 | - 0,6 | 11,1 |
| 0 | 17,8 | 0,3 | 8,5 | 2,5 | 53,5 | 1,4 | 9,0 |
| 2 | 15,5 | 2,3 | 8,3 | 4,5 | 45,0 | 3,4 | 7,9 |
| 4 | 11,3 | 4,3 | 8,9 | 6,5 | 51,5 | 5,4 | 8,3 |
| 6 | 9,9 | 6,3 | 8,5 | 8,5 | 85,0 | 7,4 | 8,2 |
| 8 | 8,4 | 8,3 | 9,7 | 10,5 | 117,0 | 9,4 | 13,4 |
| 10 | 11,5 | 10,3 | 11,5 | 12,5 | 196,0 | 11,4 | 18,9 |
| 12 | 16,1 | 12,3 | 15,4 | 14,5 | | 13,4 | 19,2 |
| 14 | 17,0 | 14,3 | 17,4 | 16,5 | | 15,4 | 20,1 |
| 16 | 19,1 | 16,3 | 20,1 | 18,5 | | 17,4 | 22,9 |

Dans tous les cas, un optimum est observé pour une distance dX intermédiaire. Cet optimum de perte de charge est similaire pour les buses à jet plat, à jet rectiligne et à jet à cône plein.

### Variation du débit de liquide

Compte tenu des bons résultats obtenus avec la buse à jet rectiligne, les mesures sont effectuées avec cette buse en position de recul maximum soit dX= -1,7cm ceci afin de laisser le libre passage du gaz dans le tube d'injection.

Les variations de débit se font à partir de 200 1.h⁻¹ par incrément de 200 1.h⁻¹. On observe que le nombre de bulles augmente proportionnellement avec le débit. En effet, plus la vitesse du liquide est grande et plus sa pénétration dans la masse liquide est importante.

La poursuite des essais a été effectuée à un débit maximal de 1,1 m³.h⁻¹.

### Le tube avec lame

Les inventeurs ont placé sur la paroi interne du tube une paroi sous la forme d'une lame venant perturber le jet de liquide.

Ils ont ainsi réalisé le module de la présente invention.

La lame dévie le jet de liquide vers le bas tout en faisant barrage au flux de gaz circulant à la partie supérieure du tube, responsable, dans la plupart des essais précédents, des bulles de grosse taille. Le jet de liquide dispersé sur la paroi entraîne le gaz.

Le flux de gaz dirigé vers le bas est dispersé dans la masse liquide de l'enceinte.

Afin d'améliorer ce système et d'en définir ses limites, différentes modifications ont été apportées à la position de la lame. Elles portent sur l'angle α de la lame par rapport à l'axe du tube, la distance P de la lame vis à vis de l'extrémité du tube, la distance (H) de l'extrémité libre de la lame vis à vis du sommet du tube, et le point d'impact I du jet de liquide sur la lame.

### Variation de l'angle α de la lame

Quatre angles α sont expérimentés : 30°, 47°, 60° et 90°.

Pour une inclinaison de 30°, le flux d'air en haut du tube n'est pas complètement arrêté par la lame et des bulles de taille importante échappent à la dispersion.

Pour une inclinaison de 47°, la dispersion est très satisfaisante et le phénomène observé à 30° a disparu.

Pour une inclinaison de 60°, la déviation est trop importante et le liquide vient frapper la partie inférieure du tube ce qui se traduit par une diminution de la force d'impact et par conséquent une diminution de la dispersion.

Pour 90°, le gaz est freiné en sortie par un barrage liquide : la perte de charge augmente fortement et la dispersion est médiocre.

Le meilleur angle pour ces essais s'est avéré être proche de 45°.

### Variation de la hauteur de la lame

La hauteur de la lame influe fortement sur les pertes de charge, du fait de la variation de la section de sortie. La hauteur de lame H offrant les meilleures performances pour un compromis perte de charge/dispersion correspond au 1/3 du diamètre du tube. Par exemple aussi pour un tube de 32 mm, H peut être compris entre 6 et 10 mm.

### Variation de la position de la lame

La lame est plus ou moins avancée vis à vis de la sortie du tube. Le placement optimal est une distance P égale à un diamètre de tube de la base de la lame à l'extrémité du tube.

### Variation de l'impact du jet sur la lame

Les inventeurs ont déterminé quelle est l'influence du point d'impact du jet sur la lame sur la dispersion du jet.

Pour cela, trois essais ont été réalisés :
- Pas de point d'impact sur la lame, le jet passe sous la lame, seul le gaz est dévié vers le bas.
- La moitié du jet impacte à la partie inférieure de la lame.
- La totalité du jet impacte la lame à son point le plus bas.
- L'effet d'un impact en haut de lame est identique à celui d'une disposition de lame à 90°.

Les essais ont montré que le jet impactant en totalité à la partie inférieure de la lame apporte les meilleurs résultats.

### Exemple 5 : Dispositif utilisant le module de la présente invention

A partir des éléments de dimensionnement recueillis dans l'exemple précédent, un dispositif selon la présente invention a été réalisé.

Ce dispositif a été réalisé pour traiter un débit de gaz de 500 m³.h¹.

Il est basé sur un montage en étoile de 16 modules de la présente invention. Ce dispositif est représenté sur les figures 4, 5, et 6 annexées.

Sur ces figures, la référence 100 indique le dispositif de la présente invention, la référence 102 un support fixe, la référence 1 les modules de la présente invention, la référence 104 des moyens de fixation, la référence 106 l'entrée du gaz.

Sur la figure 5, le dispositif 100 est ouvert, et les buses 23 sont visibles, dispersées en étoile. La référence 106 indique les trous pour les moyens de fixation 104, et la référence 107 des moyens de fixation du support des buses.

Sur la figure 6, la référence 110 indique le tube d'arrivée du liquide dans le dispositif de la présente invention, placé en dessous de ce dernier.

Ses caractéristiques de fonctionnement sont les suivantes :
- Débit de liquide : 16 m³.h⁻¹ pour une pression de 1,9 bar,
- Débit maximum de gaz traité : 640 m³.h⁻¹,
- vitesse moyenne du gaz dans les canalisations pour 500 m³.h⁻¹ : 18m.s⁻¹.

Ce générateur offre la possibilité de fonctionner dans une plage de débit très large en neutralisant une partie des modules.

Les figures présentent ce dispositif dans sa réalisation en PVC et inox.

Il est mis en fonctionnement dans une eau avec et sans tensioactif pour un débit de gaz de 500 m³.h⁻¹, et permet d'obtenir d'excellents résultats de dispersion du gaz dans le liquide.

### Exemple 6 : Utilisation de la présente invention pour la génération d'une mousse

Cet exemple présente l'utilisation d'un module de la présente invention pour mettre en contact un gaz, ici de l'air, avec un liquide comprenant un agent moussant.

En utilisant le module de la présente invention, avec un mélange ORAMIX (marque déposée)/amonyl à 0,05% en masse, les essais ont confirmé la bonne qualité de la mousse obtenue. En effet, une mousse fine avec un foisonnement, c'est à dire un rapport gaz/liquide, proche de 20 a été obtenue.

Le pilote a été testé sans et avec le tube pourvu de la lame d'impact. Dans la première configuration, la mousse, peu régulière, a mis plusieurs dizaines de secondes à occuper les 3/4 du volume de l'enceinte. Par contre, avec le module de la présente invention, il a été généré une mousse très fine et homogène remplissant le même volume en moins de 10 s.

### Exemple 7 Simulation de la décontamination d'une cuve de 2 m³

Des essais de génération d'un volume plus important que dans l'exemple précédant de l'ordre de 2 m³ à un débit de 25m³.h⁻¹ sont réalisés dans le cadre d'une étude de décontamination de cuves.

Ces essais confirment les résultats ci-dessus : la mousse obtenue est de bonne qualité avec un foisonnement, rapport gaz/liquide, de l'ordre de 20.

## Revendications

1. Procédé de mise en contact d'un gaz et d'un liquide dans lequel :
- on fait circuler dans un tube sensiblement horizontal et immergé dans le liquide, à partir d'un moyen pour introduire le gaz dans le tube disposé entre la première et la deuxième extrémité du tube, un flux de gaz remplissant le tube et se déplaçant vers la deuxième extrémité du tube, et
- on envoie dans le flux de gaz, à partir de la première extrémité du tube, le liquide sous forme d'un jet suivant une première direction sensiblement parallèle à l'axe du tube et n'entrant pas en contact avec celui-ci, sur une paroi inclinée d'un angle de 35 à 55 degrés par rapport à la première direction, la paroi dispersant le jet de liquide dans le gaz, une ouverture étant prévue dans le tube au niveau de sa deuxième extrémité pour que le liquide sorte du tube avec le gaz dès que le jet est dispersé par la paroi.

2. Procédé selon la revendication 1, dans lequel le jet est un jet rectiligne.

3. Procédé selon la revendication 1, dans lequel le jet a une pression allant de 2x10⁵ à 5x10⁵ Pa.

4. Procédé selon la revendication 1, dans lequel le jet est sensiblement horizontal.

5. Procédé selon la revendication 1, dans lequel la paroi présente un bord libre et le jet est envoyé sur la paroi au voisinage de ce bord libre.

6. Procédé selon la revendication 1, dans lequel le flux de gaz est provoqué en introduisant dans le tube le gaz sous pression.

7. Procédé selon la revendication 1, dans lequel le flux de gaz est provoqué par une dépression au niveau la deuxième extrémité du tube.

8. Procédé selon la revendication 1, dans lequel la paroi est inclinée de telle sorte que le jet soit dispersé vers le bas.

9. Procédé de traitement d'une eau usée par oxygénation ou ozonation de cette eau, dans lequel l'oxygénation ou l'ozonation est réalisée au moyen d'un procédé selon l'une quelconque des revendications 1 à 8, dans lequel le gaz est l'oxygène ou l'ozone et le liquide est l'eau usée à traiter.

10. Procédé de traitement d'un gaz pollué par barbotage au moyen d'un liquide de traitement, ledit procédé comprenant une étape de mise en contact du gaz et du liquide de traitement au moyen d'un procédé selon l'une quelconque des revendications 1 à 8, dans lequel le gaz est le gaz pollué et le liquide est le liquide de traitement du gaz.

11. Procédé selon la revendication 10, dans lequel le liquide de traitement comprend un agent moussant permettant de former de la mousse à partir du gaz à traiter et du liquide de traitement.

12. Procédé selon la revendication 11, comprenant en outre une étape de séparation du gaz traité de la mousse formée.

13. Utilisation du procédé de mise en contact d'un gaz et d'un liquide selon l'une quelconque des revendications 1 à 8 pour effectuer une réaction chimique, biochimique, ou un échange physique avec ou sans particules en suspension dans le gaz ou dans le liquide.

14. Module (1) de mise en contact d'un gaz et d'un liquide comprenant :
- un tube (3), sensiblement horizontal, comportant une première (5) et une deuxième (7) extrémités,
- un moyen (21) pour introduire le gaz dans le tube disposé entre la première (5) et la deuxième (7) extrémités de celui-ci,
- un moyen pour envoyer le liquide sous forme d'un jet (9) parallèle à l'axe du tube (3) dans la direction de la deuxième extrémité (7) du tube, le jet (9) n'entrant pas en contact avec le tube (3), ce moyen étant disposé au niveau de la première extrémité (5) du tube,
- une paroi d'impact (11) du jet (9) faisant saillie dans le tube (3) au niveau de sa deuxième extrémité (7), la paroi (11) étant inclinée d'un angle de 35 à 55 degrés par rapport à l'axe du tube (3), la paroi (11) présentant un bord libre dans le tube et ayant une position telle que le jet vient en totalité en impact contre celle-ci au voisinage dudit bord libre, et
- une ouverture (15) prévue dans le tube (3), au niveau de la deuxième extrémité (7) du tube (3), de manière à ce que le jet dispersé par son impact sur la paroi sorte directement du tube.

15. Module selon la revendication 14, dans lequel le moyen (23) pour envoyer le liquide sous forme d'un jet est une buse à jet rectiligne.

16. Module selon la revendication 14, dans lequel la paroi d'impact (11) est disposée de telle manière qu'elle disperse le jet (9) de liquide vers le bas.

17. Module selon la revendication 14, dans lequel la paroi d'impact (11) fait barrage au gaz introduit dans le tube, pour forcer l'entraînement du gaz par le jet dispersé par la paroi.

18. Module selon la revendication 14, dans lequel la paroi d'impact (11) est fixée au tube (3).

19. Module selon la revendication 14, dans lequel la paroi (11) fait saillie dans le tube (3) d'environ 1/3 du diamètre du tube.

20. Module selon la revendication 14, dans lequel la paroi (11) est inclinée d'un angle de 42 à 47 degrés.

21. Module selon la revendication 14, dans lequel la paroi (11) est une lame.

22. Module selon la revendication 14, dans lequel le tube a un diamètre de 32 mm.

23. Dispositif (100) de mise en contact d'un gaz et d'un liquide comprenant une pluralité de modules (1) de mise en contact d'un gaz et d'un liquide selon l'une quelconque des revendications 14 à 22.

24. Dispositif selon la revendication 23, dans lequel les modules (1) de mise en contact d'un gaz et d'un liquide sont fixés en étoile sur un support (102).

25. Dispositif selon la revendication 23 ou 24 comprenant 16 modules (1).

## Claims

1. Method of contacting a gas and a liquid, in which:
- in a substantially horizontal tube immersed in the liquid, starting from means for introducing the gas into the tube disposed between the first and the second end of the tube, bringing about a gas flow filling the tube and displacing toward the second end of the tube, and
- the liquid in the form of a jet is sent into the gas flow from the first end of the tube in the form of a jet along a first direction substantially parallel to the tube axis and not coming into contact with the tube, onto a wall inclined at an angle of 35-55 degrees with respect to the first direction, the wall dispersing the jet of liquid into the gas, an opening being provided in the tube in the region of its second end so that the liquid leaves the tube with the gas as soon as the jet is dispersed by the wall.

2. Method according to claim 1, wherein the jet is a rectilinear jet.

3. Method according to claim 1, wherein the jet has a pressure of 2x10⁵ to 5x10⁵ Pa.

4. Method according to claim 1, in which the jet is substantially horizontal.

5. Method according to claim 1, wherein the wall has a free edge and the jet is sent onto the wall in the neighborhood of this free edge.

6. Method according to claim 1, wherein the gas flow is brought about by introducing the gas under pressure into the tube.

7. Method according to claim 1, wherein the gas flow is brought about by a reduced pressure in the region of the second end of the tube.

8. Method according to claim 1, wherein the wall is inclined so that the jet is dispersed downward.

9. Method of treatment of wastewater by oxygenation or ozonization, wherein the oxygenation or ozonization is performed by means of a method according to any one of claims 1-8, wherein the gas is oxygen or ozone and the liquid is the wastewater to be treated.

10. Method of treatment of a polluted gas by bubbling by means of a treatment liquid, the said method comprising a step of contacting the gas and the treatment liquid by means of a method according to any one of claims 1-8, wherein the gas is the polluted gas and the liquid is the gas treatment liquid.

11. Method according to claim 10, wherein the treatment liquid comprises a foaming agent permitting formation of foam from the gas to be treated and the treatment liquid.

12. Method according to claim 11, furthermore comprising a step of separation of the treated gas from the formed foam.

13. Utilization of the method of contacting a gas and a liquid according to any one of claims 1-8 for effecting a chemical or biochemical reaction or a physical exchange with or without particles suspended in the gas or in the liquid.

14. Module (1) for contacting a gas and a liquid, comprising:
- a tube (3), substantially horizontal, comprising a first (5) and a second (7) end,
- means (21) for introducing the gas into the tube, disposed between the first (5) and the second (7) end of the tube,
- means for sending the liquid in the form of a jet (9) parallel to the axis of the tube (3) in the direction of the second end (7) of the tube, the jet (9) not coming into contact with the tube (3), this means being disposed in the region of the first end (5) of the tube,
- a wall (11) for impact of the jet (9), projecting into the tube (3) in the region of its second end (7), the wall (11) being inclined at an angle of 35-55 degrees with respect to the axis of the tube (3), the wall (11) having a free edge in the tube and having a position such that the jet comes totally into impact against the said wall in the neighborhood of the said free edge, and
- an opening (15) provided in the tube (3), in the region of the second end (7) of the tube (3), so that the jet dispersed by its impact on the wall leaves the tube directly.

15. Module according to claim 14, wherein the means (23) for sending the liquid in the form of a jet is a nozzle with a rectilinear jet.

16. Module according to claim 14, wherein the impact wall (11) is disposed such that it disperses the jet (9) of liquid downward.

17. Module according to claim 14, wherein the impact wall (11) forms a barrier to the gas introduced into the tube to force the entrainment of the gas by the jet dispersed by the wall.

18. Module according to claim 14, wherein the impact wall (11) is fixed to the tube (3).

19. Module according to claim 14, wherein the wall (11) projects into the tube (3) by about 1/3 of the tube diameter.

20. Module according to claim 14, wherein the wall (11) is inclined at an angle of 42 to 47 degrees.

21. Module according to claim 14, wherein the wall (11) is a plate.

22. Module according to claim 14, wherein the tube has a diameter of 32 mm.

23. Device (100) for placing in contact a gas and a liquid, comprising a plurality of modules (1) for contacting a gas and a liquid according to any one of claims 14-22.

24. Device according to claim 23, wherein the modules (1) for contacting a gas and a liquid are fixed in a star formation on a support (102).

25. Device according to claim 23 or 24 comprising 16 modules (1).

## Patentansprüche

1. Verfahren zum Kontaktieren eines Gases und einer Flüssigkeit, bei dem:
- man in einem im Wesentlichen horizontalen und in eine Flüssigkeit eingetauchten Rohr mittels einer Einrichtung zur Einleitung des Gases in das Rohr, die sich zwischen dem ersten und dem zweiten Ende des Rohrs befindet, einen das Rohr füllenden und sich in Richtung zweites Ende des Rohrs bewegenden Gasstrom fließen lässt, und
- man die Flüssigkeit von dem ersten Ende des Rohrs aus, in Form eines zu der Achse des Rohrs im Wesentlichen parallelen und dieses nicht berührenden Strahls, in einer ersten Richtung in den Gasstrom spritzt, auf eine in Bezug auf die erste Richtung unter einem Winkel von 35 bis 55 Grad geneigte Wand, die den Flüssigkeitsstrahl in dem Gas zerstreut, wobei das Rohr an seinem zweiten Ende eine Öffnung aufweist, damit die Flüssigkeit mit dem Gas das Rohr verlässt, sobald der Strahl durch die Wand zerstreut worden ist.

2. Verfahren nach Anspruch 1, bei dem der Strahl ein geradliniger Strahl ist.

3. Verfahren nach Anspruch 1, bei dem der Strahl einen Druck hat, der von 2x10⁵ bis 5x10⁵ Pa geht.

4. Verfahren nach Anspruch 1, bei dem der Strahl im Wesentlichen horizontal ist.

5. Verfahren nach Anspruch 1, bei dem die Wand einen freien Rand aufweist und der Strahl in der Nähe dieses freien Rands auf die Wand prallt.

6. Verfahren nach Anspruch 1, bei dem der Gasstrom **dadurch** bewirkt wird, dass man Druckgas in das Rohr einleitet.

7. Verfahren nach Anspruch 1, bei dem der Gasstrom **dadurch** bewirkt wird, dass man am zweiten Ende des Rohrs einen Unterdruck erzeugt.

8. Verfahren nach Anspruch 1, bei dem die Wand so geneigt ist, dass der Strahl nach unten zerstreut wird.

9. Verfahren zur Behandlung von Abwasser durch Oxidierung oder Ozonisierung dieses Wassers, bei dem die Oxidierung oder die Ozonisierung mit Hilfe eines Verfahrens nach einem der Ansprüche 1 bis 8 realisiert wird und bei dem das Gas Sauerstoff oder Ozon ist und die zu behandelnde Flüssigkeit Abwasser ist.

10. Verfahren zur Behandlung eines verunreinigten Gases durch Einblasung in eine Behandlungsflüssigkeit, wobei dieses Verfahren einen Kontaktierungsschritt des Gases und der Behandlungsflüssigkeit mit Hilfe eines Verfahrens nach einem der Ansprüche 1 bis 8 umfasst, bei dem das Gas das verunreinigte Gas ist und die Flüssigkeit die Behandlungsflüssigkeit des Gases ist.

11. Verfahren nach Anspruch 10, bei dem die Behandlungsflüssigkeit auch ein Schaummittel enthält, das ermöglicht, aus dem zu behandelnden Gas und der Behandlungsflüssigkeit Schaum zu erzeugen.

12. Verfahren nach Anspruch 11, das außerdem einen Schritt zur Trennung des behandelten Gases und der Behandlungsflüssigkeit umfasst.

13. Anwendung des Kontaktierungsverfahrens eines Gases und einer Flüssigkeit nach einem der Ansprüche 1 bis 8, um eine chemische, biochemische Reaktion oder einen physikalischen Austausch mit oder ohne in dem Gas oder in der Flüssigkeit schwebender Partikel zu bewirken.

14. Modul (1) zum Kontaktieren eines Gases und einer Flüssigkeit, umfassend:
- ein im Wesentlichen horizontales Rohr (3) mit einem ersten Ende (5) und einem zweiten Ende (7),
- eine Einrichtung (21) zum Einleiten des Gases in das Rohr, angeordnet zwischen seinem ersten Ende (5) und seinem zweiten Ende (7),
- eine Einrichtung, um die Flüssigkeit in Form eines zu der Achse des Rohrs (3) parallelen Strahls (9) in Richtung des zweiten Endes (7) des Rohrs zu spritzen, wobei der Strahl (9) das Rohr (3) nicht berührt und diese Einrichtungen sich am ersten Ende (5) des Rohrs befinden,
- eine Aufprallwand (11) des Strahls (9), die an seinem zweiten Ende (7) aus dem Rohr (3) herausragt, wobei die Wand (11) in Bezug auf die Achse des Rohrs (3) unter einem Winkel von 35 bis 55 Grad geneigt ist, und die Wand (11) in dem Rohr (3) einen freien Rand aufweist und eine solche Position hat, dass der gesamte Strahl in der Nähe des freien Randes auf sie prallt, und
- eine in dem Rohr (3) am zweiten Ende (7) des Rohrs (3) so vorgesehene Öffnung (15), dass der durch den Aufprall auf der Wand zerstreute Strahl das Rohr direkt verlässt.

15. Modul nach Anspruch 14, bei dem die einen Flüssigkeitsstrahl spritzende Einrichtung (23) eine Düse ist, die einen geradlinigen Strahl erzeugt.

16. Modul nach Anspruch 14, bei dem die Aufprallwand (11) so angeordnet ist, dass sie den Strahl (9) nach unten zerstreut.

17. Modul nach Anspruch 14, bei dem die Aufprallwand (11) eine Sperre für das in das Rohr eingeleitete Gas bildet, um die Mitnahme des Gases durch den durch die Wand zerstreuten Strahl zu erzwingen.

18. Modul nach Anspruch 14, bei dem die Aufprallwand (11) an dem Rohr (3) befestigt ist.

19. Modul nach Anspruch 14, bei dem die Aufprallwand (11) über ungefähr 1/3 des Rohrdurchmessers in das Rohr (3) hineinragt.

20. Modul nach Anspruch 14, bei dem die Aufprallwand (11) unter einem Winkel von 42 bis 47 Grad geneigt ist.

21. Modul nach Anspruch 14, bei dem die Aufprallwand (11) eine Platte ist.

22. Modul nach Anspruch 14, bei dem das Rohr einen Durchmesser von 32 mm hat.

23. Vorrichtung (100) zum Kontaktieren eines Gases und einer Flüssigkeit, eine Vielzahl von Modulen (1) zum Kontaktieren eines Gases und einer Flüssigkeit nach einem der Ansprüche 14 bis 22 umfassend.

24. Vorrichtung nach Anspruch 23, bei dem die Module (1) zum Kontaktieren eines Gases und einer Flüssigkeit sternförmig an einem Träger (102) befestigt sind.

25. Vorrichtung nach Anspruch 23 oder 24 mit 16 Modulen (1).
